# EUROPEAN PATENT APPLICATION

(11) **EP 2 755 104 A2**
(43) Date of publication of application: **16.07.2014**
(21) Application number: 13161080.0
(22) Date of filing: 26.03.2013
(51) Int. Cl.: G06F 1/16

(54) **Upper lid body of laptop**

(30) Priority: 09.01.2013 TW 102100792
(71) Applicant: Giga-Byte Technology Co., Ltd., New Taipei City 231 (TW)
(72) Inventor: Ho, Jui Feng, 231 New Taipei City (TW); Kuo, Hsiang Yun, 231 New Taipei City (TW)
(74) Representative: Schwerbrock, Florian

(57) **Abstract**

An upper lid body of a laptop includes a rear case, a front bezel, a display panel and at least one magnetic component. The rear case and the front bezel are combined with each other and an accommodation room is defined therein, so as to place the display panel between the rear case and the front bezel. The magnetic component is disposed in one of the rear case and the front bezel. The rear case and the front bezel are combined with each other by magnetic force of the magnetic component, so that the rear case and the front bezel are able to assemble/disassemble easily.

## Description

### CROSS-REFERENCES TO RELATED APPLICATIONS

### BACKGROUND OF THE INVENTION

### Field of the Invention

This disclosure relates to an upper lid body, and more particularly to an upper lid body of a laptop, which uses magnetic components as a mean to assemble/disassemble.

### Description of the Prior Art

With the advancement of the computer industry, the associated electronics have become more delicate. The development trend of current electronic devices seeks not only a better computation performance but also compactness. Take laptops as an illustration, the displays of laptops mostly are liquid crystal displays, which have advantages of high resolution, small volume, light weight, low voltage drive, and low power consumption, so that liquid crystal displays has become the mainstream of displays.

For laptops equipped with liquid crystal displays, the upper lid body, which is the body includes the display, includes a rear case (so called A member), a front bezel (so called B member), and a liquid crystal display. The liquid crystal display is disposed in the front bezel, and then the liquid crystal display and the front bezel is fixed to the rear case. The front bezel is pivotally connected to the main body by a hinge.
However, for the assembling of the liquid crystal display of current laptops, appearance consideration, structure limitation, and other considerations of the front bezel are concerned, so that the design of the upper lid body is difficult to be screwless. And the aesthetic feeling of the appearance of the laptop will be destroyed by the screws fixed on the front bezel. Besides, after the laptop is used for a period of time, the exposed screw holes may have some dirt in them, and the screws may get rusty due to the direct contact with the air, so that it is difficult to assembly/disassembly the upper lid body.

To solve the above problem caused by the screw-fixing method, a fixing method which uses hook structure to combine the rear case and the front bezel is proposed. Though the conventional hook structure solves the problem of aesthetic feeling caused by the screw-fixing method, the hook structure generates new problems: the rear case and the front bezel are difficult to disassemble, so that a specific hand tool is needed to disassemble, and during the disassemble process, the hook structure may be damaged due to improper force implementation.

The backing adhesive is also used to bond the rear case and the front bezel of the upper lid body of the laptop, but it is also difficult to disassemble the upper lid body bonding by the backing adhesive. Besides, when the rear case and the front bezel are disassembled, the backing adhesive loses the adhesive function, and new backing adhesive should be pasted, so that the rear case and the front bezel can be assembled together again.

The above assembling methods, that is, screw-fixing, hook structure, and backing adhesive method, will cause inconvenience and difficulty while the upper lid body is assembling/disassembling, so how to provide a structure that can be assemble quickly and conveniently is an important issue that should be solved by the technicians in the art.

### SUMMARY OF THE INVENTION

In view of the above problems, this disclosure provides an upper lid body of a laptop, so as to solve the issue that the aesthetic feeling of the appearance of the electronic device is destroyed, as well as the case assembling/disassembling is inconvenient.

The upper lid body of the laptop includes a rear case, a front bezel, a display panel, and two magnetic components. The front bezel is combined with the rear case and forms an accommodation room. The display panel is disposed in the front bezel and in the accommodation room. The two magnetic components are respectively disposed to the rear case and the front bezel, and the positions of the two magnetic components correspond to each other. The rear case and the front bezel are combined with each other by the magnetic attraction of the two magnetic components.

Another kind of upper lid body of a laptop is disclosed. The upper lid body of the laptop includes a rear case, a front bezel, a display panel, and a magnetic component. The material of the front bezel is magnetic metal, and the front bezel is combined with the rear case and forms an accommodation room inside. The display panel is disposed in the front bezel and in the accommodation room. The magnetic component is disposed to the rear case, and the rear case and the front bezel are combined with each other by the magnetic attraction of the magnetic component and the front bezel.

By the disposition of the magnetic components, the rear case and the front bezel of the upper lid body of the laptop is able to assemble/disassemble without specific hand tools, and the integrity of the appearance of the laptop is created, so as to enhance the aesthetic feeling of the overall appearance.

### BRIEF DESCRIPTION OF THE DRAWINGS

FIG. 1 is a perspective view of the laptop according to a first embodiment;

FIG. 2 is an exploded view of the upper lid body of the laptop according to the first embodiment;

FIG. 3 is a cross-sectional view of the upper lid body of the laptop according to the first embodiment;

FIG. 4 is a perspective view of the laptop according to the first embodiment;

FIG. 5 is an exploded view of the upper lid body of the laptop according to a second embodiment;

FIG. 6 is a cross-sectional view of the upper lid body of the laptop according to the second embodiment; and

FIG. 7 is a perspective view of the laptop according to the second embodiment.

### DETAILED DESCRIPTION OF THE INVENTION

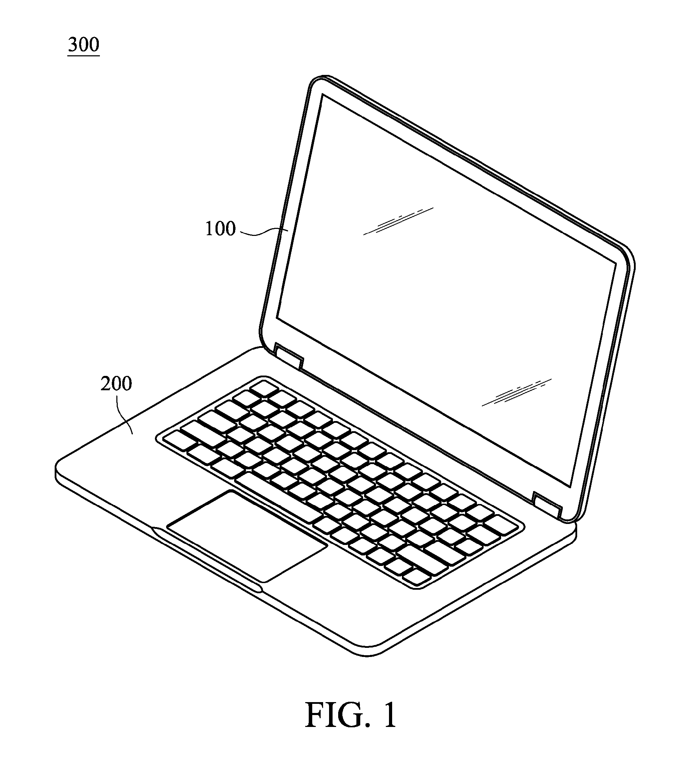

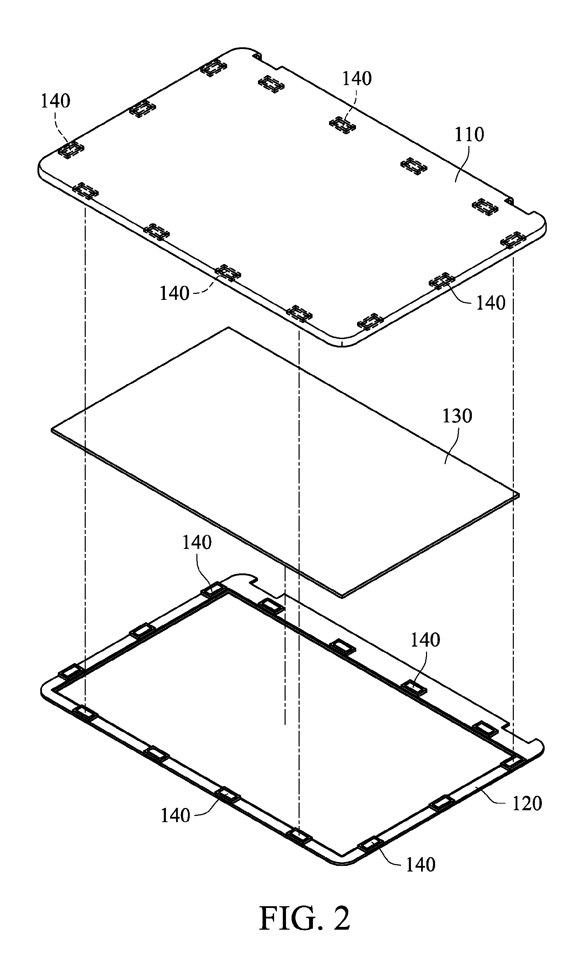

Refer to FIG. 1 to FIG. 4, a laptop 300 according to the first embodiment includes an upper lid body 100 and a main body 200. The upper lid body 100 is able to rotate with respect to the main body 200 to the opened position or the closed position, so that users can use the laptop or carry the laptop with them easily. A motherboard and a plurality of electronic components are electronically disposed in the main body 200 (not shown in the figures), for example, a central processing unit, a video card, a Northbridge, and a Southbridge, so as to execute the default function of the laptop 300.

The upper lid body 100 includes a rear case 110, a front bezel 120, a display panel 130, and at least two magnetic components 140. The rear case 110 is so called A member in industry, and the front bezel 120 is so called B member in industry. The rear case 110 is a long-rectangular thin metal board, and the front bezel 120 is a hollowed frame. The rear case 110 is combined with the front bezel 120 and forms an accommodation room inside. The display panel 130 could be a liquid crystal display, not limited as described herein. The display panel 130 is disposed in the front bezel 120 and in the accommodation room, and the display panel is exposed only in the hollowed part of the front bezel 120.

The magnetic components 140 are respectively disposed in the edges of the rear case 110 and the front bezel 120. Each magnetic component 130 is disposed at intervals, and the position of each magnetic component 140 in the rear case 110 corresponds to the position of each magnetic component 140 in the front bezel 120.

The magnetic components 140 could all be magnet. Or the magnetic components 140 in the rear case 110 are magnetic, and the magnetic components 140 in the front bezel 120 are made of magnetic metal, such as iron, cobalt, nickel, and the alloy thereof, not limited as described herein. Or the magnetic components 140 in the front bezel 120 are magnet, the magnetic components 140 in the rear case 110 are made of magnetic metal, such as iron, cobalt, nickel, and the alloy thereof, not limited as described herein.

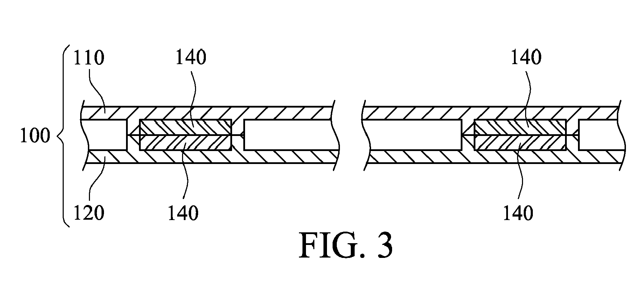

People having ordinary skill in the art can make proper modification to the number, deposition interval lengths, or the material of the magnetic components 140 according to the actual needs or design requirements, not limited as described herein. Most importantly, the magnetic components 140 in the rear case 110 are attracted by the magnetic force of the magnetic components 140 in the front bezel 120, as shown in FIG. 3. Therefore, the rear case 110 and the front bezel 120 are combined with each other by the magnetic force of the magnetic components 140, such that the assembling of the upper lid body 100 of the laptop 300 is screwless. Besides, a force a little larger than the magnetic component 140 is only needed to disassemble the upper lid body 100, such that the assembling and disassembling is quick and easy.

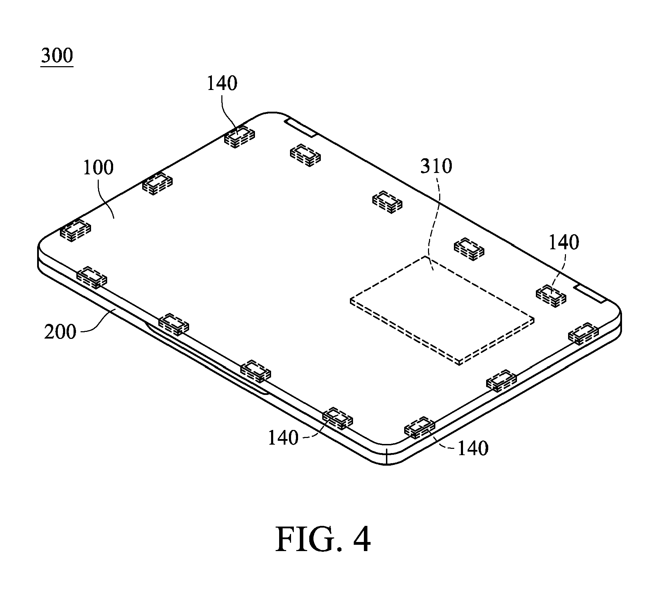

Refer to FIG. 4, the positions of the magnetic components 140 are spaced from the hard disk driver 310 of the laptop 300, for avoiding the magnetic head of the hard disk driver 310 and the proper functioning of the sectors being affected by the magnetic force of the magnetic components 140. The positions of the magnetic components 140 also should be spaced from magnetic electronic components of the main body 200, not only the hard desk driver 310.

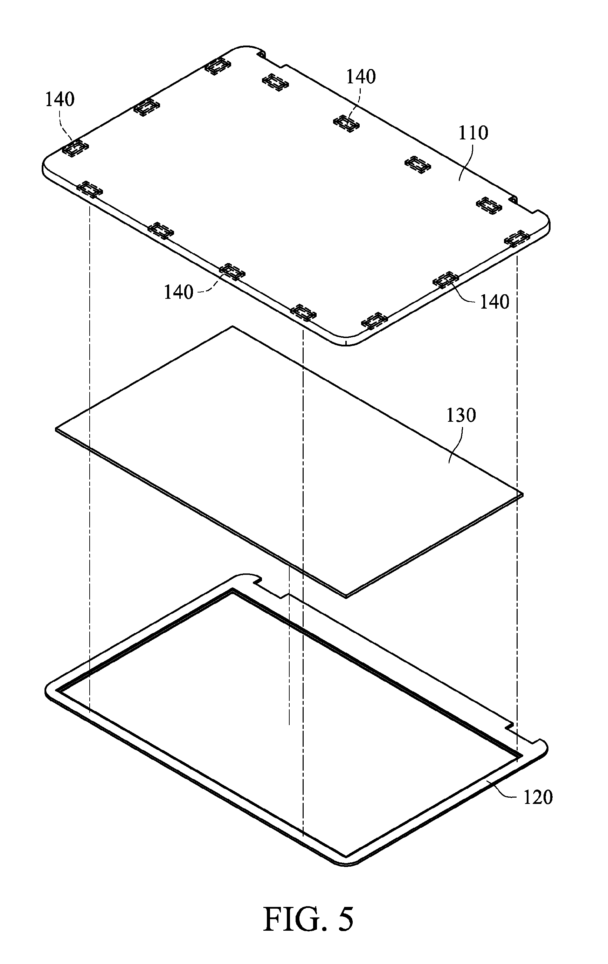

Refer to FIG. 5 to FIG. 7, a laptop 300 according to the second embodiment includes an upper lid body 100 and a main body 200 pivotally connected to each other. The upper lid body is able to rotate with respect to the main body 200 to the opened position or the closed position, so that users can use the laptop or carry the laptop with them easily. A motherboard and a plurality of electronic components are electronically disposed in the main body 200 (not shown in the figures), for example, a central processing unit, a video card, a Northbridge, and a Southbridge, so as to execute the default function of the laptop 300.

The upper lid body 100 includes a rear case 110, a front bezel 120, a display panel 130, and at least one magnetic component 140. The rear case 110 is so called A member in industry, and the front bezel 120 is so called B member in industry. The rear case 110 is a long-rectangular thin metal board, and the front bezel 120 is a hollowed frame. The material of the front bezel 120 is magnetic metal, such as iron, cobalt, nickel, and the alloy thereof, not limited as described herein. The rear case 110 is combined with the front bezel 120 and forms an accommodation room inside. The display panel 130 could be a liquid crystal display, not limited as described herein. The display panel 130 is disposed in the front bezel 120 and in the accommodation room, and the display panel is exposed only in the hollowed part of the front bezel 120.

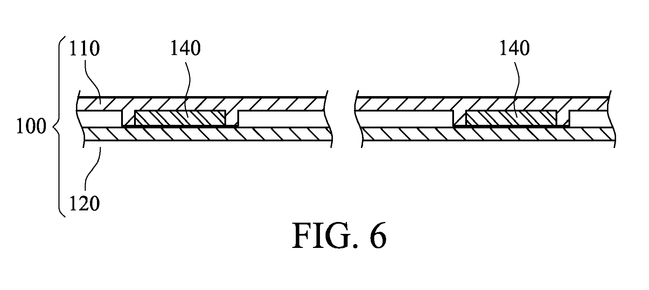

The magnetic components 140 are respectively disposed in the edges of the rear case 110. Each magnetic component 130 is disposed at intervals, and the magnetic components are magnets. People having ordinary skill in the art can make proper modification to the number or deposition interval lengths of the magnetic components 140 according to the actual needs or design requirements, not limited as described herein. Most importantly, the magnetic components 140 in the rear case 110 and the front bezel 120 made of magnetic metal are attracted with each other by the magnetic force, as shown in FIG. 6. Therefore, the rear case 110 and the front bezel 120 are combined with each other by the magnetic force, such that the assembling of the upper lid body 100 of the laptop 300 is screwless. Besides, a force a little larger than the magnetic component 140 is only needed to disassemble the upper lid body 100, such that the assembling and disassembling is quick and easy.

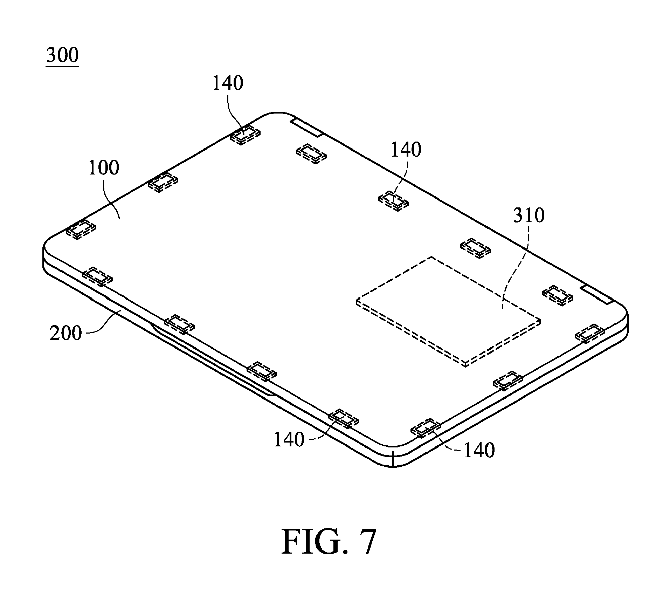

Refer to FIG. 7, the positions of the magnetic components 140 are spaced from the hard disk driver 310 of the laptop 300, for avoiding the magnetic head of the hard disk driver 310 and the proper functioning of the sectors being affected by the magnetic force of the magnetic components 140. The positions of the magnetic components 140 also should be spaced from magnetic electronic components of the main body 200, not only the hard desk driver 310.

By the disposition of the magnetic components, the rear case and the front bezel of the upper lid body of the laptop is able to assemble/disassemble without the specific hand tools, and the integrity of the appearance of the laptop is created, so as to enhance the aesthetic feeling of the overall appearance.

## Claims

1. An upper lid body (100) of a laptop (300), comprising:
a rear case (110);
a front bezel (120), combined with the rear case (110) to define an accommodation room between the rear case (110) and the front bezel (120);
a display panel (130), disposed to the front bezel (120) and located in the accommodation room; and
two magnetic components (140), respectively disposed to the rear case (110) and the front bezel (120), wherein the positions of the two magnetic components (140) correspond to each other;
wherein the rear case (110) and the front bezel (120) are combined with each other by the magnetic attraction of the two magnetic components (140).

2. The upper lid body (100) of claim 1, wherein the two magnetic components (140) are magnets.

3. The upper lid body (100) of claim 1, wherein one of the magnetic component (140) is a magnet, and the other of the magnetic component (140) is made of magnetic metal.

4. The upper lid body (100) of claim 1, wherein the two magnetic components (140) are respectively disposed at the edges of the rear case (110) and the front bezel (120).

5. The upper lid body (100) of claim 4, wherein the positions of the two magnetic components (140) are spaced from a hard desk driver (310) of the laptop (300).

6. An upper lid body (100) of a laptop (300), comprising:
a rear case (110);
a front bezel (120), combined with the rear case (110) to define an accommodation room between the rear case (110) and the front bezel (120), wherein the material of the front bezel (120) is magnetic metal;
a display panel (130), disposed to the front bezel (120) and located in the accommodation room; and
a magnetic component (140), disposed to the rear case (110);
wherein the rear case (110) and the front bezel (120) are combined with each other by the magnetic attraction of the magnetic component (140).

7. The upper lid body (100) of claim 6, wherein the magnetic component (140) is a magnet.

8. The upper lid body (100) of claim 6, wherein the magnetic component (140) is disposed at the edges of the rear case (110).

9. The upper lid body (100) of claim 8, wherein the position of the magnetic component (140) is spaced from a hard desk driver (310) of the laptop(300).
